# EUROPEAN PATENT APPLICATION

(11) **EP 4 260 969 A1**
(43) Date of publication of application: **18.10.2023**
(21) Application number: 22075007.9
(22) Date of filing: 13.04.2022
(51) Int. Cl.: B23B 31/40, B25B 5/14

(54) **GRIPPER ASSEMBLY FOR GUIDING AND MACHINING PIPE ELEMENTS IN CNC_MACHINES**

(71) Applicant: Bemi Company b.v., 5061 JP Oisterwijk (NL)
(72) Inventor: VAN OOIJEN, Stephanus Maria, 5061 JP Oisterwijk (NL)

(57) **Abstract**

A gripper assembly (1) is represented for machining by cutting inner and outer screw threads (11, 12) at the end of a pipe element (10) in CNC-machines (not shown). Said gripper assembly (1) can move the pipe element (10) back and forth into the CNC-machine with low tolerances. Also the ends of mentioned pipe elements (10) are pretreated by removing half the wall-thickness over an axial length X and then these lengths X are provided with inner and outer screw threads (11, 12).

## Description

The present invention concerns a gripper assembly for guiding and machining pipe elements in CNC-machines, such as thick-walled steel pipe elements of different length L, outer diameter D and wall thickness d are to be provided at one end with an internal screw thread over a prepared wall thickness d/2 over a pipe length X and at the other end over an outside screw thread also over a pipe length X, wherein in practice said machined pipe lengths are screwed together to a total length of p.L, wherein inside a set screwed together pipe elements, due to the low screw tolerances, mortars, fluid or gas materials with a high pressure up to 80 bar are transportable.

### Background of the invention

The state of the art does not disclose a gripper assembly for machining pipe elements in CNC-machines. The gripper assembly has to clamp, transport to and retract said pipe element in a very precise way to the screw cutting machine part of the CNC-machine for cutting an inner and outer screw thread in the half-reduced wall thickness of said pipe element over an axial distance X of the length L of the pipe element.

Mentioned pipe elements are described in our EP21075017.0; filed 15-11-2021; titled: "Short Pipe Elements for the Bearing Core of Bored Piles mostly under Buildings"; applicant and inventor Stephanus, Maria van Ooijen. Said transportation, guiding and retraction of the pipe element with the gripper assembly is fully automized with an articulated system of rods driven by a stepping motor. Mister Henri Liekens , applicant and inventor of EP21075016.2 ; titled : " Insert Pipe Unit for CNC-Machines " , had also a practical inventive contribution in present patent application.

### Object of the invention

The aim of the invention is to provide said gripper assembly, which can couple and decouple said pipe element in a very easy and automatic way, wherein such a bending stiff combination is obtained for moving back and forth for machining in the CNC-machine. Also, the gripper assembly can internally clean up the metal curls and other parts from the inside of the machined pipe elements (with different possible length) with compressed air or liquid. A short length of the gripper assembly for long (up to 6 m) pipe elements and a long gripper assembly for short (up to 1 m) pipe elements.

### Summary of the invention

The gripper assembly for machining, pipe elements in a CNC-machine according to the invention is characterized in that said gripper assembly consists of a set of N tubular mutually connected ring-shaped elements with a total working length A, wherein said gripper assembly has at one end (back side) a central thick walled axle to hold in a clamping horizontally movable bearing and horizontal driving construction and at the other end (front side) a conically retractable head element to shift into said thick-walled pipe element and to lock with this for further supplying the thick-walled pipe element back and forth of mentioned CNC-machine in order to prepare the wall-thickness to d/2 at the end over a length X and to apply mentioned screw threads over said length X.

The advantage is to get a steering unit with the gripper assembly to machine at the ends of the pipe elements a screw thread over a length X in the CNC-machine in about 1 to 1,5 minutes. So, a production capacity is obtained of around 40 threaded pipe elements in an hour.

Furthermore, the gripper assembly according to the invention is characterized in such a way, that the number N of said set tubular mutually connected ring-shaped elements is dependent of the machining of the pipe element with length L and the number N is between 2 and 7, preferably N is 6 for short pipe element lengths.

The advantage is, a very precise production procedure to get screw threads at the end of the pipe elements with very low tolerances for different lengths N.L for a good closing off of the pipe connections for internal pressures up to 80 bar.

Then, the gripper assembly according to the invention, characterized in that said mutually connected ring-shaped elements are executed with sets of circular placed screws.

The advantage is, an adaptable gripper assembly for a pipe element length up to 6 m, so the number of mutually connected ring-shaped elements is adaptable to the length of the pipe elements.

Then, the gripper assembly is further developed, characterized in that said clamping, bearing and horizontal driving construction (not shown) is horizontally and vertically adjustable for horizontally moving said gripping assembly together with mentioned clamped pipe element to the CNC-machine (not shown) for further machining.

The advantage is, that the mechanical bending strength of said clamping, bearing and horizontal driving construction is adaptable.

Then, the gripper assembly according to the invention is further characterized in that said conical retractable head element to shift into said thick-walled pipe element and to couple herewith, wherein the conical retractable head element is conically hollow and is retractable over an axial conical set of ring element which expands in order to clamp, so said pipe element is coupled in a very strong way.

The advantage is a very strong connection between gripper assembly and pipe element.

Furthermore, the gripper assembly is further characterized in that the conical retractable head element couples and uncouples said thick-walled pipe element and is retractable by a negative air pressure and uncouples said head element with a spring-loaded construction to loosen the pipe element.

The advantage is, a very easy and quick coupling and uncoupling construction for gripper assembly and pipe element.

Then, the gripper assembly is further characterized in that said gripper assembly has internal pipes to press air or liquid in order to internally clean the screw threads of said finished pipe element.

The advantage is, a necessary and quick cleaning of the inside of the pipe elements.

Then, the gripper assembly according to the invention is further characterized in that the steel quality is S355, as normalized in Europe.

The advantage is a very good processing of cutting screw threads at the end of the pipe elements.

### Brief description of the drawing

The embodiment of the present invention will now be described by way of example, with reference to the accompanying drawing with figures in which:
figure 1 shows an oblique view of the gripper assembly according to the invention; and
figure 2 shows a cross-section over the line II-II of figure 1.

### Detailed description

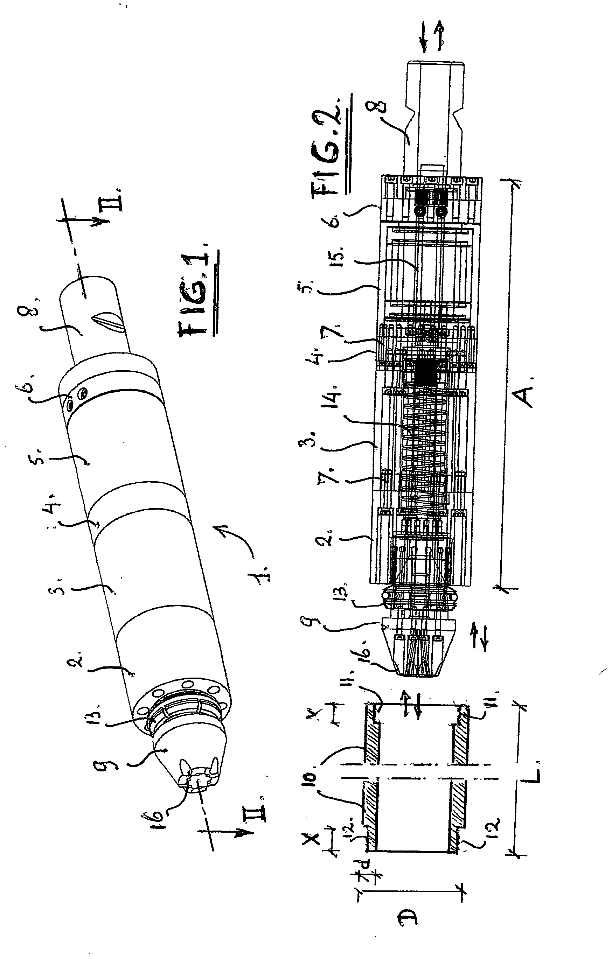

In figure 1 an oblique view of the gripper assembly 1 is shown. The gripper assembly 1 is built up of a set of N tubular mutually connected ring-shaped elements 2, 3, 4, 5, 6. The connection is executed by screws 7. At the back side of the gripper assembly 1 a central thick-walled axle 8 is located to clamp in a driving construction (not shown). At the front side is located a fast rotatable head element 9 together the ring-shaped element 2 in a bearing.

In figure 2 the coupling and uncoupling procedure with head element 9 and pipe element 10 is shown in cross section. Said head element 9 and the ring-shaped element 2 is executed as one segment, which is fast rotatable in a bearing. At the front side of mentioned head element 9 are four nozzles 16 to press cooling liquid to the rotating plates and cutter bits of the CNC-machine. Later on pressed air through the internal pipes 15 to clean up the internal thick-walled pipe element 10. At the front side a conical retractable head element 9 is located which can be shifted into pipe element 10 with a length L up to 6 m. The CNC-machine cuts over a length X an internal and external screw thread 11 and 12 at the end of the pipe element in two stages. The pipe element 10 is forced over axial conical ring elements 13, which expand to couple the pipe element 10 with the head element 9. A spring 14 is arranged in order to uncouple the pipe element 10 from mentioned head element 9.

However, it is obvious that modifications and/or additions to the afore mentioned gripper assembly 1 can be made, but these shall remain within the field and scope of the invention.

## Claims

1. Gripper assembly for guiding and machining pipe elements in CNC-machines, such as thick-walled steel pipe elements of different length L, outer diameter D and wall thickness d are to be provided at one end with an internal screw thread over a prepared wall thickness d/2 over a pipe length X and at the other end over an outside screw thread also over a pipe length X, where in practice said machined pipe lengths are screwed together to a total length of p.L, wherein inside a set screwed together pipe elements due to the low screw tolerances mortars, fluid or gas materials with a high pressure up to 80 bar are transportable, **characterized in that** said gripper assembly (1) consists of a set of N tubular mutually connected ring-shaped elements (2,3,4,5,6) with a total working length A, wherein said gripper assembly (1) has at one end (back side) a central thick-walled axle (8) to hold in a clamping horizontally movable bearing and horizontal driving construction and at the other end (front side) a conically retractable head element (9) to shift into said thick-walled pipe element (10) and to couple herewith for further supplying the thick-walled pipe element (10) back and forth of mentioned CNC-machine in order to prepare the wall-thickness to d/2 at the end over a length X and to apply mentioned screw threads (11, 12) over said length X.

2. Gripper assembly as in claim 1, **wherein** the number N of said set tubular mutually connected ring-shaped elements (2,3,4,5,6) is dependent of the machining of the pipe element (10) with length L and the number N is between 2 and 7, preferably N is 6 for short pipe element lengths.

3. Gripper assembly as in claim 1-2, **wherein** said mutually connected ring-shaped elements (2,3,4,5,6) is executed with sets of circular placed screws (7).

4. Gripper assembly as in claim 1-3, **wherein** said clamping, bearing and horizontal driving construction (not shown) is horizontally and vertically adjustable for horizontally moving said gripping assembly (1) together with mentioned clamped pipe element (10) to the CNC-machine (not shown) for further machining.

5. Gripper assembly as in claim 1-4, **wherein** said conical retractable head element (9) to shift into said thick-walled pipe element (10) and to couple herewith, wherein the conical retractable head element (9) is conically hollow and is retractable over an axial conical ring element (13) which expands in order to clamp, so said pipe element (10) is coupled in a very strong way.

6. Gripper assembly as in claim 1-5, **wherein** said conical retractable head element (9) couples and uncouples said thick-walled pipe element (10) and is retractable by a negative air pressure and uncouples said head element (9) with a spring-loaded construction (14) to loosen the pipe element (10).

7. Gripper assembly as in the afore mentioned claims, **wherein** said gripper assembly (1) has internal pipes (15) to press cooling liquid to the nozzles (16 ) for cooling the rotation plates and cutter bits of the CNC-Machine ( not shown ) and later on pressed air for internal cleaning of the screw threads (11) of said finished pipe element (10).

8. Gripper assembly as in claim 1-7, **wherein** said gripper assembly (1) is adjustable with his length A by removing some of all ring-shaped elements (3,4,5 ) owing to the length L of the thick-walled steel pipes of a steel quality of S355 , as normalized in Europe.
